# FASCICULE DE BREVET EUROPEEN

(11) **EP 0 863 831 B1**
(45) Date de publication et mention de la délivrance du brevet: **29.03.2000**
(21) Numéro de dépôt: 96938899.0
(22) Date de dépôt: 03.12.1996
(51) Int. Cl.: B62M 1/02

(54) **PEDALIER SANS POINT MORT**
TRETLAGER OHNE TOTPUNKT
CRANKSET WITH NO NEUTRAL POSITION

(30) Priorité: 07.12.1995 CH 345695; 18.12.1995 FR 9514963
(43) Date de publication de la demande: 16.09.1998
(73) Titulaire: Niculescu, Florin, 2022 Bevaix (CH)
(72) Inventeur: Niculescu, Florin, 2022 Bevaix (CH)
(74) Mandataire: Balsters, Robert
(86) Numéro de dépôt international: CH9600424
(87) Numéro de publication internationale: WO9720726

(56) Documents cités:
- WO-A-86/05459
- WO-A-95/19909
- GB-A- 2 135 399
- US-A- 4 772 252
- US-A- 4 816 009
- US-A- 5 281 003

## Description

La présente invention concerne un pédalier sans point mort, notamment pour bicyclette, comportant : un tube fixe de pédalier, un arbre extérieur creux monté à rotation autour d'un premier axe par des premiers paliers dans le tube de pédalier et solidaire d'une première manivelle, un arbre intérieur monté à rotation par des seconds paliers coaxialement dans l'arbre extérieur et solidaire d'une seconde manivelle, des moyens d'étanchéité pour assurer une protection étanche desdits paliers vis-à-vis de l'extérieur du pédalier, un élément de sortie monté à rotation autour d'un second axe parallèle et décalé par rapport au premier axe sur un élément excentrique fixé au tube de pédalier, l'élément de sortie étant destiné à entraîner une transmission mécanique, et deux liaisons articulées reliant l'élément de sortie respectivement à chaque manivelle ou à chaque arbre.

L'invention s'applique en particulier à des pédaliers de bicyclettes, mais aussi à tout autre cas d'utilisation d'un pédalier mû par la force musculaire, par exemple pour propulser un véhicule quelconque ou pour actionner une machine, un ventilateur, une génératrice électrique, etc.

Dans un pédalier classique, la position verticale des manivelles dans un même plan radial constitue un point mort, parce que le poids du pédaleur ne peut produire un couple sur aucune des deux manivelles dans cette position. Pour supprimer cet inconvénient, il a été proposé depuis plus de 60 ans de décentrer vers l'avant le plateau denté qui entraîne la chaîne d'une bicyclette, de désolidariser les manivelles l'une de l'autre et du plateau pour leur permettre un jeu angulaire réciproque, et de relier chaque manivelle ou son arbre au plateau par une liaison articulée capable d'absorber les mouvements radiaux dus à l'excentricité. Les documents de brevets FR 763'303, FR 905'476, FR 984'583, FR 2'526'392, FR 2'584'671, US 4'159'652, US 4'772'252, US 4'816'009 et US 5'067'370 décrivent de tels pédaliers sans point mort. Le document WO 95/19909 décrit aussi un tel pédalier, comportant en outre un support oscillant qui porte les arbres de manivelles pour permettre, lorsqu'on le déplace au moyen d'un levier de commande, de modifier la valeur de l'excentricité entre zéro et différentes valeurs discrètes.

Toutefois aucun de ces pédaliers ne s'est imposé commercialement, probablement à cause de problèmes de réalisation et de résistance aux effets de l'eau et de la saleté, car l'étanchéité est difficile à assurer en raison de la multiplicité des pièces mobiles.

Pour des pédaliers classiques à un seul arbre, des exemples connus de joints d'étanchéité annulaires sont illustrés dans les documents de brevets GB 2 135 399 et FR 2 616 493.

Dans un pédalier du genre indiqué en préambule, décrit dans le document WO 86/05459, chacune des deux liaisons articulées entre l'arbre correspondant et le plateau servant d'élément de sortie comporte un bras radial fait d'une pièce avec l'arbre et orienté dans la même direction que la manivelle correspondante. Pour transmettre une force approximativement tangentielle et donc un couple au plateau, la liaison comporte soit un galet porté par le plateau et engagé dans une glissière radiale du bras, soit un disque oscillant logé dans le bras et pourvu d'un tourillon excentrique engagé dans le plateau. Ce mécanisme articulé est protégé, du côté extérieur du plateau, par un carter circulaire fixé au plateau, ayant un flasque frontal pourvu d'une ouverture centrale pour laisser passer l'arbre intérieur portant la manivelle de ce côté. Cette ouverture est assez grande pour permettre le mouvement rotatif oscillant du carter par rapport à l'arbre, à cause de l'excentricité; elle est obturée intérieurement par un flasque intégré à l'arbre, une garniture d'étanchéité en forme de disque annulaire étant placée entre les deux flasques de façon à glisser sur l'un d'eux. Une partie de la surface de glissement sur ce flasque est ainsi tantôt couverte par la garniture, tantôt exposée à l'air libre. Les salissures qui l'atteignent peuvent donc s'introduire dans le joint, détériorer rapidement l'étanchéité, atteindre les paliers et les endommager, ce qui a conduit à abandonner la commercialisation de ce type de pédalier. Celui-ci avait en outre pour inconvénient l'encombrement transversal du carter contenant les deux bras radiaux entre le plateau et la manivelle correspondante, nécessitant d'éloigner aussi l'autre manivelle pour maintenir la symétrie par rapport au plan médian de la bicyclette.

La présente invention a pour objet un pédalier susceptible d'éviter les inconvénients susmentionnés, tout en assurant une étanchéité durable des paliers des arbres, qui sont en général des roulements, et en permettant une construction compacte et légère. Un but supplémentaire est d'agencer la liaison articulée sous une forme simple, efficace et supportant les conditions ambiantes extérieures. Un autre but supplémentaire est d'agencer la liaison articulée de manière à obtenir une transmission optimale du couple moteur à l'élément de sortie lorsque ce couple moteur est maximal, donc lorsque la manivelle descendante est approximativement horizontale.

Dans sa forme générale, l'invention concerne un pédalier selon les caractéristiques de la revendication 1.

En outre, les seconds moyens d'étanchéité comportent une garniture annulaire d'étanchéité, qui obture un intervalle annulaire entre l'arbre extérieur et l'arbre intérieur du côté de la seconde manivelle, et des moyens de fermeture qui obturent de manière étanche un alésage central de l'arbre extérieur du côté de la première manivelle. Ces moyens de fermeture peuvent être formés par exemple par un bouchon étanche, ou par le fond dudit alésage si celui-ci est borgne.

Ainsi les paliers de roulement des arbres de manivelles, qui sont les éléments les plus sensibles à la saleté, peuvent être protégés par des garnitures d'étanchéité situées entièrement à l'intérieur du tube de pédalier, radialement entre des pièces coaxiales dont l'une est rotative par rapport à l'autre, notamment entre des surfaces cylindriques de ces pièces. Ces garnitures peuvent être d'un type connu et éprouvé, occupant peu de place et donnant satisfaction dans les pédaliers classiques. Il n'y a pas besoin d'un carter extérieur, chaque articulation des liaisons articulées pouvant aisément être réalisée par un palier étanche, disponible dans le commerce.

Dans une forme de réalisation particulièrement avantageuse d'un pédalier selon l'invention, chacune desdites liaisons articulées comporte une biellette ayant une extrémité reliée à l'élément de sortie par une première articulation, l'autre extrémité de ladite biellette est reliée à l'arbre correspondant ou à la manivelle correspondante par une seconde articulation, et ladite première articulation se trouve à proximité d'un plan radial passant par le premier et le second axe lorsque la manivelle correspondante est dans une position horizontale descendante. Il en résulte des facilités de construction et une amélioration de l'efficacité du pédalier.

D'autres caractéristiques et avantages de l'invention apparaîtront dans la description suivante d'un mode de réalisation préféré d'un pédalier de bicyclette, présenté à titre d'exemple en référence aux dessins annexés, dans lesquels :
- la figure 1 est une vue en perspective du pédalier de bicyclette selon l'invention,
- la figure 2 est une vue en élévation latérale du pédalier,
- la figure 3 est une vue en coupe du pédalier dans le plan de ses deux axes parallèles, ce plan étant par exemple horizontal, et
- la figure 4 est un schéma en élévation montrant huit positions successives des manivelles du pédalier,
- la figure 5 représente l'évolution du couple transmis aux plateaux dentés sur un tour du pédalier, lorsque le cycliste exerce uniquement une force verticale descendante sur les pédales,
- la figure 6 représente l'évolution de la vitesse de rotation de chaque manivelle sur un tour du pédalier, pour une vitesse constante des plateaux dentés.

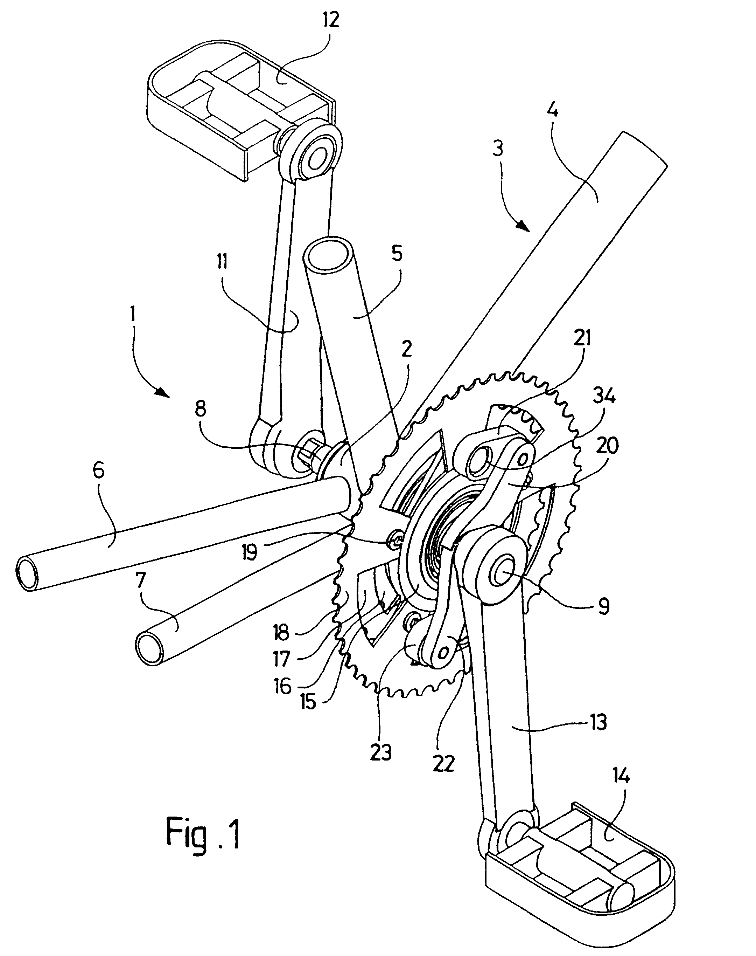

En référence aux figures 1 à 3, le pédalier 1 comporte un tube de pédalier 2 qui est incorporé à un cadre de bicyclette 3, ce cadre comprenant des tubes 4, 5, 6 et 7, une extrémité de chaque tube étant soudée au tube 2. Un arbre extérieur 8 et un arbre intérieur 9 sont montés dans le tube 2 de manière rotative et coaxiale, pour tourner autour d'un premier axe 10. Une manivelle gauche 11 pourvue d'une pédale 12 est fixée de manière amovible sur l'arbre extérieur 8, et une manivelle droite 13 pourvue d'une pédale 14 est fixée de manière amovible sur l'arbre intérieur 9. Sur le côté droit de la bicyclette, le pédalier 1 comporte un porte-plateaux 15 sur lequel, de manière classique, sont montés par exemple trois plateaux dentés amovibles 16, 17 et 18 destinés à entraîner la roue arrière de la bicyclette par une transmission à chaîne. Les plateaux sont fixés au moyen de vis 19. Dans un plan radial situé entre le porte-plateaux 15 et la manivelle droite 13, l'arbre extérieur 8 présente un bras radial 20 dont l'extrémité libre est reliée au porte-plateaux par une biellette articulée 21. De même, l'arbre intérieur 9 présente un bras radial 22 dont l'extrémité libre est reliée au porte-plateaux par une biellette articulée 23. Les bras 20 et 22 s'étendent dans des directions respectives approximativement opposées, mais en oscillant angulairement l'un par rapport à l'autre au cours de la rotation du pédalier, de même que les manivelles.

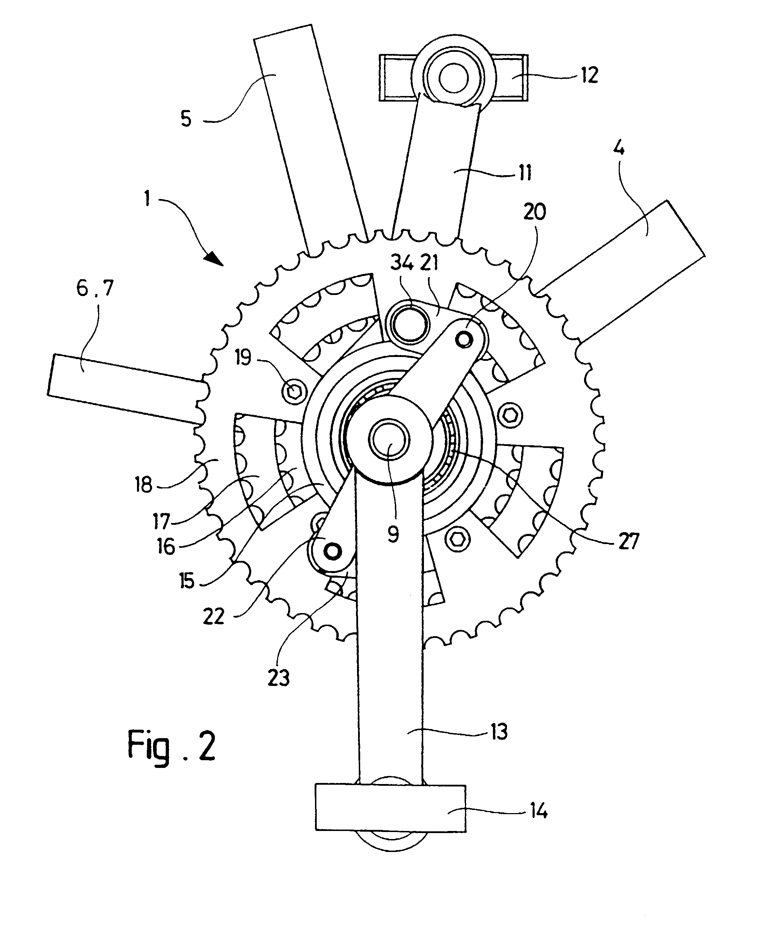

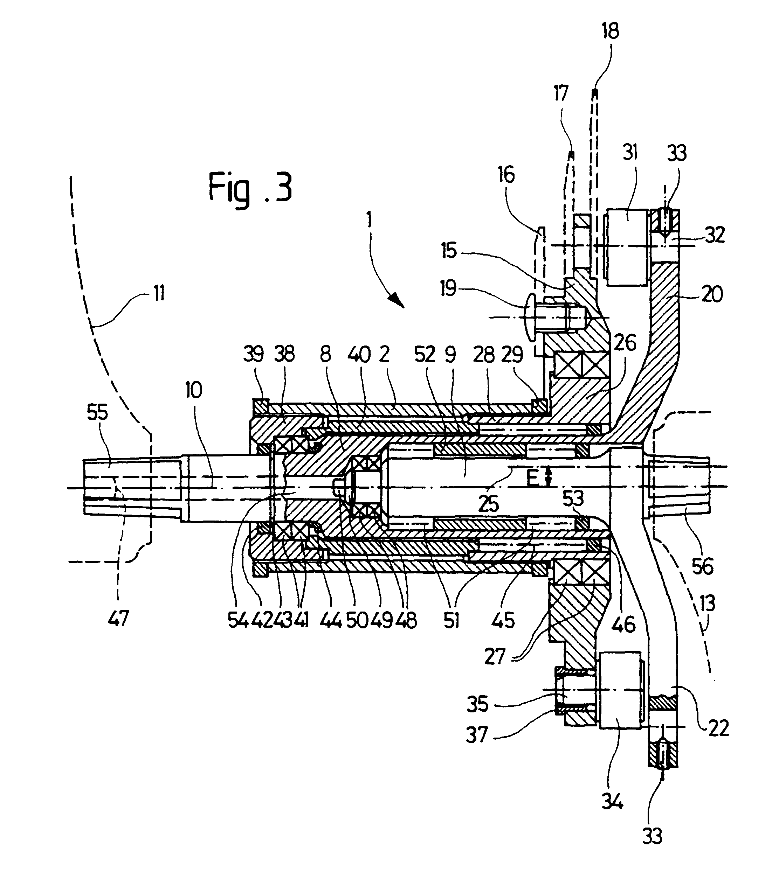

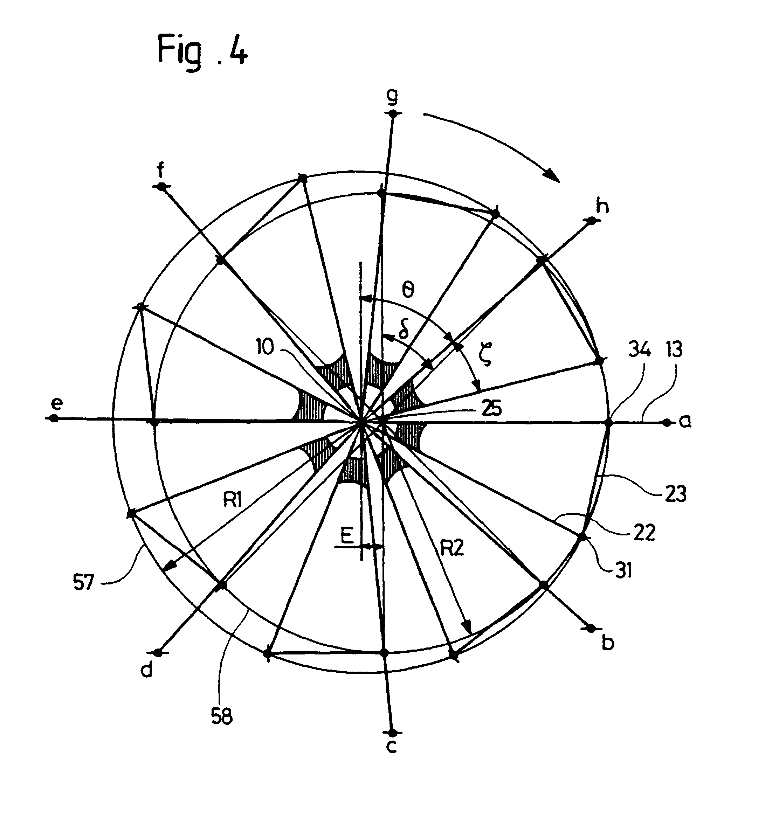

Dans les figures 2 et 3, on remarque que le porte-plateaux 15 est monté de manière excentrique par rapport aux arbres de manivelles 8 et 9, son axe de rotation 25 ayant une excentricité E par rapport à l'axe 10 des arbres. Le porte-plateaux 15 est monté sur un excentrique stationnaire 26 au moyen d'une paire de roulements à billes 27 centrés sur l'axe 25. L'excentrique 26 présente un embout cylindrique 28 centré sur l'axe 10 et muni d'un filetage extérieur permettant de le visser dans un filetage correspondant du tube de pédalier 2. L'embout 28 porte également un contre-écrou 29 qu'on bloque par vissage contre le tube 2 pour bloquer la position angulaire de l'excentrique 26. Ainsi, par desserrage du contre-écrou 29, il est possible de faire tourner l'excentrique 26 pour orienter l'excentricité E dans n'importe quelle direction voulue. Cette direction est horizontale vers l'avant dans l'exemple représenté. De manière connue, il en résulte que lorsque l'une des manivelles 11, 13 se trouve dans le plan vertical passant par l'axe 10, c'est à dire à son point mort, l'autre manivelle se trouve en avant de ce plan et peut produire un couple, comme on l'expliquera en référence à la figure 4.

Dans la figure 3, les biellettes 21 et 23 ne sont pas représentées, pour clarifier le dessin et laisser apparaître la construction de leurs articulations. L'articulation de chaque biellette 21, 23 sur le bras correspondant 20, 22 est réalisée par un galet rotatif étanche 31 dont l'axe 32 est fixé dans le bras au moyen d'une vis de blocage 33. Le galet 31 est chassé dans un orifice correspondant de la biellette. L'articulation de chaque biellette sur le porte-plateaux 15 est réalisée par un autre galet rotatif étanche 34 dont l'axe 35 est fileté et maintenu dans un orifice du porte-plateaux au moyen d'une douille filetée de serrage 36. Les galets 31 et 34 peuvent être par exemple du type KR19C.DZ de la société FAG. Les deux biellettes 21 et 23 ont les mêmes dimensions, et leurs articulations formées par les deux galets 34 sur le porte-plateaux 15 sont diamétralement opposées par rapport à l'axe 25.

La figure 3 montre également la construction à l'intérieur du tube de pédalier 2, qui est fileté intérieurement à ses deux extrémités pour recevoir respectivement l'excentrique 26 à droite et, à gauche, une douille filetée extérieurement 38 susceptible d'être bloquée au moyen d'un contre-écrou 39 analogue au contre-écrou 29. La douille 38 présente trois portées intérieures de diamètres échelonnés pour centrer respectivement une première entretoise tubulaire 40, un ou deux roulements à billes 41 portant l'arbre extérieur 8, et une garniture annulaire d'étanchéité 42 du même type que celles qu'on utilise dans les pédaliers de bicyclette classiques. L'arbre 8 est fixé axialement sur les roulements 41 au moyen d'un circlip 43 et d'une rondelle 44 prise entre la bague intérieure d'un des roulements 41 et un épaulement de l'arbre. La bague extérieure du même roulement 41 bute axialement contre la première entretoise 40, dont l'autre extrémité bute contre l'embout 28 de l'excentrique 26. A droite, l'arbre extérieur 8 est supporté dans l'excentrique 26 par un autre palier, formé par un roulement à aiguilles 45 obturé extérieurement par une garniture annulaire d'étanchéité 46 analogue à la garniture 42.

L'arbre extérieur creux 8 est traversé sur toute sa longueur par un alésage central 54 présentant trois diamètres successifs échelonnés dont le plus petit, débouchant du côté de la première manivelle 11, constitue un trou d'accès permettant le passage d'un tournevis. En service, ce trou est obturé par un bouchon amovible étanche 47. Le reste de l'alésage 54 contient l'arbre intérieur 9 et ses paliers. Ceux-ci comprennent d'une part un ou deux roulements à billes 48 dont les bagues intérieures sont bloquées sur une extrémité de l'arbre intérieur 9 par serrage au moyen d'une rondelle intérieure 49 et d'une vis 50, et d'autre part deux roulements à aiguilles 51 séparés par une deuxième entretoise 52 et protégés de l'extérieur par une garniture annulaire d'étanchéité 53 obturant l'intervalle radial entre les deux arbres.

Cependant, on notera que le montage à rotation de l'arbre intérieur 9 dans l'arbre extérieur 8 pourrait être réalisé autrement. Par exemple, l'alésage 54 de l'arbre 8 peut être borgne, de sorte que l'arbre lui-même constitue une fermeture étanche de cet alésage du côté de la première manivelle 11. Pour bloquer axialement les paliers entre les deux arbres, on peut alors prévoir que la vis 50 traverse l'arbre intérieur 9, ou bien que l'extrémité gauche de l'arbre 9 présente un collet radial contre lequel les paliers sont pressés au moyen d'une bague placée à droite de ces paliers et poussée contre eux par la manivelle droite 13 lorsqu'on la fixe sur son arbre. Par ailleurs, on notera que le nombre et le type des roulements 48 et 51 peuvent être différents de ce qui est décrit ci-dessus.

Ainsi, les deux arbres 8 et 9 sont montés d'une manière parfaitement rigide à l'intérieur du tube de pédalier 2, tandis que l'étanchéité de leurs paliers est entièrement assurée par la fermeture de l'alésage 54 à gauche et par les joints d'étanchéité annulaires 42, 46 et 53 serrés radialement entre deux surfaces cylindriques coaxiales. Ces joints ont des diamètres relativement petits et sont bien protégés dans le tube de pédalier, ce qui leur assure une longue durée de service.

En outre, la construction décrite ci-dessus permet d'assembler le pédalier à l'avance, hors du tube 2, puis de le monter en un bloc dans ce tube. L'assemblage s'effectue comme suit :
- chasser chaque galet 31 dans la biellette correspondante 21, 23.
- engager l'axe 32 de chaque galet 31 dans le bras correspondant 20, 22 et le bloquer au moyen de la vis 33.
- chasser les deux roulements 27 sur l'excentrique 26.
- chasser le porte-plateaux 15 sur les roulements 27.
- fixer le grand plateau 18 et le plateau moyen 17 sur le porte-plateaux 15.
- fixer les deux galets 34 sur le porte-plateaux 15.
- fixer le petit plateau 16 sur le porte-plateaux 15.
- dans l'arbre extérieur 8, introduire la rondelle 49, puis chasser les deux roulements 48.
- chasser le premier roulement à aiguilles 51, introduire l'entretoise 52, chasser l'autre roulement à aiguilles 51, puis la garniture d'étanchéité 53.
- tenir l'arbre extérieur 8 verticalement et introduire la vis 50 placée sur un tournevis dans le trou 54.
- introduire l'arbre intérieur 9 dans l'arbre extérieur 8. Serrer la vis 50 assez fortement et placer le bouchon 47.
- introduire l'entretoise 40 dans l'excentrique 26, puis chasser le roulement à aiguilles 45 dans l'excentrique jusqu'à ce qu'il touche l'entretoise. Chasser également la garniture d'étanchéité 46. Ressortir l'entretoise 40.
- visser le contre-écrou 29 contre l'excentrique 26.
- introduire les deux arbres dans l'excentrique 26.
- introduire l'entretoise 40 dans l'excentrique 26.
- placer la rondelle 44, dont la largeur a été ajustée au préalable, sur l'arbre extérieur 8, puis les roulements 41 et le circlip 43.
- visser l'ensemble à fond dans le tube de pédalier 2.
- dévisser l'ensemble jusqu'à ce que l'excentricité E de l'excentrique 26 soit dirigée dans la position voulue, par exemple horizontalement vers l'avant.
- dévisser le contre-écrou 29 pour bloquer l'excentrique 26 sur le tube 2.
- introduire la garniture d'étanchéité 42 dans la douille 38.
- visser la douille 38 dans le tube 2 et serrer assez fortement.
- mettre la chaîne sur l'un des plateaux 16 à 18.
- monter les pédales sur les manivelles 11 et 13.
- monter les manivelles 11 et 13 sur les têtes profilées 55 et 56 des arbres 8 et 9.

Une caractéristique particulièrement avantageuse du pédalier 1 consiste en ce que les deux galets diamétralement opposés 34, formant les articulations des biellettes 21, 23 sur le porte-plateaux 15, sont disposés chacun sensiblement en face de la manivelle correspondante 11, 13. Cela signifie que chaque bras radial 20, 22 est décalé angulairement par rapport à la manivelle correspondante, d'un angle qui est déterminé par les longueurs de la biellette et du bras. Ce décalage est de préférence vers l'avant dans le sens de rotation normal du pédalier, afin d'exercer une traction sur la biellette, mais il pourrait aussi être dans l'autre sens. L'avantage de cette position des points d'ancrage sur le porte-plateaux est que, lorsque la manivelle est dirigée vers l'avant et produit donc le couple moteur le plus grand, la direction de la biellette est approximativement perpendiculaire à la direction de l'excentricité E, ce qui permet de transmettre le couple maximal de manière optimale au porte-plateaux, comme on le verra ci-dessous. Cet avantage est largement conservé si l'on donne à l'excentricité une direction autre qu'horizontale, pour autant qu'elle soit dirigée vers l'avant.

La figure 4 représente huit positions successives a-h de la manivelle droite 13, avec son bras radial 22, sa biellette 23 et les galets 31 et 34 formant les articulations de la biellette, pour huit positions successives espacées de 45° du porte-plateaux 15. Si l'on suppose que la bicyclette circule à une vitesse constante et que la vitesse angulaire du porte-plateaux est donc constante, les huit positions sont régulièrement espacées dans le temps. Dans la figure 4, les angles de rotation δ du porte-plateaux et θ de la manivelle ont pour origine la verticale passant par l'axe de rotation correspondant 25, 10. La figure est dessinée pour les dimensions suivantes :

| | |
|---|---|
| Longueur de chaque bras 20,22 | R₁ = 60 mm |
| Rayon du point d'ancrage 34 sur le porte-plateaux | R₂ = 55 mm |
| Excentricité (horizontale) | E = 5 mm |
| Longueur de chaque biellette 21, 23 | B = 28 mm |
| Décalage bras-manivelle | ζ = 27° |

On remarque que E = R₁ - R₂, de sorte que les deux cercles correspondants 57 et 58 sont tangents. Il en résulte qu'au voisinage de la position a, où la manivelle est dirigée vers l'avant et produit le couple maximal, la biellette est sensiblement perpendiculaire aux rayons des deux cercles et transmet donc le couple d'une manière optimale, avec des efforts radiaux minimaux.

Les positions opposées a-e, b-f, c-g et d-h représentent des positions respectives simultanées des deux manivelles. L'angle entre les deux manivelles est maximal dans la position c-g proche de la verticale, donc perpendiculaire à la direction de l'excentricité E, ce qui supprime le point mort de manière connue. Au cours de la trajectoire montante de chaque manivelle, correspondant aux positions d, e et f, la biellette 23 n'est pas perpendiculaire aux rayons R₁ et R₂, mais cela n'a pas d'importance puisqu'elle ne transmet alors pas d'effort important. Par contre, la biellette est sensiblement perpendiculaire aux rayons dans la trajectoire descendante de la manivelle (positions g, h, a et b), ce qui permet de modifier la direction d'excentricité par pivotement de l'excentrique 26, par exemple pour adapter le pédalier à la morphologie du cycliste ou à sa position personelle sur la bicyclette, sans affecter les performances du pédalier.

La figure 4 permet aussi de comprendre que la disposition des galets 34, c'est-à-dire des points d'ancrage des biellettes 21 et 23 sur le porte-plateaux 15 en face de chaque manivelle 11 et 13, peut être changée sous certaines conditions en conservant les mêmes avantages cinématiques et dynamiques. A partir du schéma de la figure 4, supposons qu'on monte la manivelle 13 dans une autre orientation sur son arbre 9, ce qui revient à choisir une autre valeur de l'angle ζ entre la manivelle et le bras radial correspondant 22. Par exemple, admettons que dans la position a du mécanisme, on démonte la manivelle 13 horizontale et on la remonte verticalement vers le haut, en procédant aussi symétriquement avec l'autre manivelle, cela revient à ajouter 90° à ζ et enlever 90° à θ sans rien changer aux autres paramètres. Le changement de θ change la direction d'application des forces par le cycliste par rapport au pédalier. Il suffit alors de faire pivoter l'ensemble du pédalier de 90° vers l'avant dans son tube 2 autour de l'axe 10 pour rétablir les conditions cinématiques et dynamiques de la figure 4. L'excentricité E devient alors verticale vers le bas, l'axe 25 se plaçant au-dessous de l'axe 10. La condition générale relative à la position préférée des articulations formées par les galets 34 est donc que, lorsque la manivelle se trouve en position horizontale vers l'avant, l'articulation 34 de la biellette correspondante sur le porte-plateaux 15 doit se trouver à proximité du plan radial passant par les deux axes 10 et 25, donc dans la même direction générale que l'excentricité E. Un avantage de cet arrangement est que la manivelle droite 13 peut facilement être placée dans le même plan radial que les deux bras 20 et 22, d'où résulte un gain sur la largeur du pédalier et l'écartement entre les deux pédales.

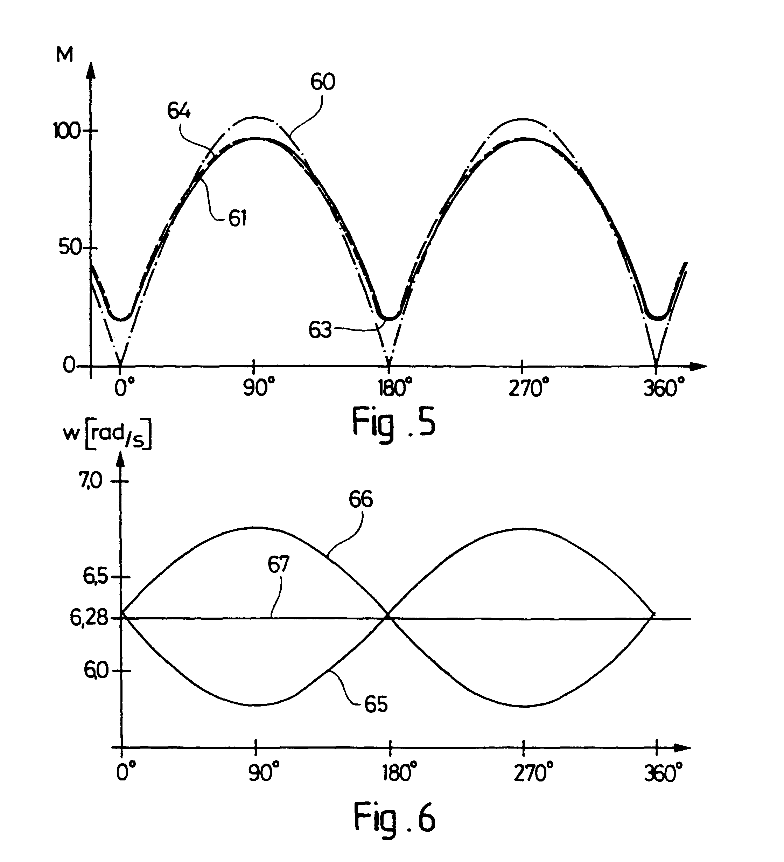

La figure 5 représente le couple M appliqué au porte-plateaux 15 en fonction de l'angle 8 de rotation de celui-ci, en supposant que le cycliste exerce uniquement une force verticale descendante de 600 N sur la manivelle descendante, les manivelles ayant une longueur standard de 175 mm. La courbe 60 représente le couple dans un pédalier traditionnel, où les deux manivelles sont solidaires du porte-plateaux. La courbe 61 représente le couple dans le pédalier 1 selon l'invention, dans la disposition de la figure 4, c'est-à-dire avec l'excentricité E horizontale vers l'avant. Cette courbe est plus plate que la courbe 60, c'est-à-dire que le couple est plus uniforme sur un tour du pédalier. Le minimum de couple 63, dans la zone de point mort où le couple 60 du pédalier traditionnel tombe à zéro, représente environ 20 % du couple maximal. En pratique, on sait que le couple minimal sera souvent un peu plus élevé, parce qu'un cycliste exercé applique tout de même certaines forces horizontales ou montantes aux pédales.

La courbe 64 représente le couple dans le pédalier 1 lorsque l'excentricité E est dirigée vers l'avant à 30° du dessous de l'horizontale. On remarque qu'elle est très proche de la courbe 61 et présente les mêmes valeurs maximales et minimales, c'est-à-dire qu'un tel pivotement de l'excentrique 26 n'affecte pas les performances du pédalier lorsque les forces appliquées aux pédales sont verticales. Par contre, il permet d'adapter la cinématique du pédalier, en particulier la position de la zone où les manivelles sont décalées, à la morphologie du cycliste et à sa position sur la bicyclette.

Le diagramme de la figure 6 représente l'évolution de la vitesse angulaire ω des manivelles en fonction de l'angle θ de la manivelle droite 13 pour une vitesse constante du porte-plateaux 15 (1 tour par seconde) et donc de la bicyclette, quand l'excentricité E est en direction horizontale, donc dans les conditions de la courbe 61 de la figure 5. La courbe 65 concerne la manivelle droite 13 et la courbe 66 concerne la manivelle gauche 11. La droite 67 représente la vitesse du porte-plateaux 15.

On constate que chaque manivelle tourne plus lentement quand elle descend, et plus vite quand elle monte. La vitesse de chaque manivelle varie progressivement, sans à-coups, et la vitesse minimale représente environ 86% de la vitesse maximale. Ceci est important pour le confort du cycliste et ménage son endurance en évitant d'imposer à ses jambes des accélérations et décélérations sensibles;

Au vu de la description qui précède, l'homme du métier comprendra que l'invention permet de réaliser un pédalier parfaitement protégé contre les conditions extérieures, en particulier, l'eau et la saleté, sans utilisation d'accessoires encombrants tels qu'un carter extérieur. De plus, le pédalier peut être complètement assemblé avant son introduction dans le tube de pédalier, ce qui garantit un montage sûr et aisé et facilite aussi un démontage éventuel. La position décalée des bras 20 et 22 par rapport aux manivelles, contrairement à l'art antérieur selon le document FR 2 584 671 où ces bras se trouvent en face des manivelles, permet une cinématique avantageuse et une transmission optimale du couple des manivelles aux plateaux, sans augmentation des dimensions et du poids de la construction. Le cas échéant, cette disposition permet aussi de réaliser en une seule pièce la manivelle droite et le bras qui lui est associé, autorisant ainsi un gain substantiel sur la largeur totale du pédalier. Ce bras n'est alors pas nécessairement radial et peut notamment s'étendre en direction circonférentielle à partir de la manivelle.

## Revendications

1. Pédalier sans point mort, notamment pour bicyclette, comportant :
- un tube fixe (2) de pédalier,
- un arbre extérieur creux (8) monté à rotation autour d'un premier axe (10) par des premiers paliers dans le tube de pédalier et solidaire d'une première manivelle (11),
- un arbre intérieur (9) monté à rotation par des seconds paliers coaxialement dans l'arbre extérieur et solidaire d'une seconde manivelle (13),
- des moyens d'étanchéité pour assurer une protection étanche desdits paliers vis-à-vis de l'extérieur du pédalier,
- un élément de sortie (15) monté à rotation autour d'un second axe (25) parallèle et décalé par rapport au premier axe sur un élément excentrique (26) fixé au tube de pédalier, l'élément de sortie étant destiné à entraîner une transmission mécanique, et
- deux liaisons articulées (20-23, 31-36) reliant l'élément de sortie respectivement à chaque manivelle ou à chaque arbre,
caractérisé en ce que les moyens d'étanchéité comprennent des premiers moyens d'étanchéité (42, 46), disposés autour de l'arbre extérieur (8) dans le tube de pédalier (2) et protégeant les premiers paliers (41, 45) vis-à-vis de l'extérieur de ce tube, et des seconds moyens d'étanchéité (47, 53), disposés dans l'arbre extérieur (8) et protégeant les seconds paliers (48, 51) vis-à-vis de l'extérieur de cet arbre, et en ce que les seconds moyens d'étanchéité comportent une garniture annulaire d'étanchéité (53), qui obture un intervalle annulaire entre l'arbre extérieur (8) et l'arbre intérieur (9) du côté de la seconde manivelle (13), et des moyens de fermeture (47) qui obturent de manière étanche un alésage central (54) de l'arbre extérieur (8) du côté de la première manivelle (11).

2. Pédalier selon la revendication 1, caractérisé en ce que l'élément excentrique (26) est réglable par pivotement autour du premier axe (10) pour régler la direction de son excentricité (E).

3. Pédalier selon la revendication 2, caractérisé en ce que l'élément excentrique (26) est vissé dans le tube de pédalier (2) et porte un contre-écrou (29) agencé pour le bloquer contre ledit tube.

4. Pédalier selon l'une des revendications précédentes, caractérisé en ce que chacune desdites liaisons articulées comporte une biellette (21, 23) ayant une extrémité reliée à l'élément de sortie par une première articulation (34-36), en ce que l'autre extrémité de ladite biellette est reliée à l'arbre correspondant (8, 9) ou à la manivelle correspondante (13) par une seconde articulation (31-33), et en ce que ladite première articulation (34-36) se trouve à proximité d'un plan radial passant par le premier et le second axe (10, 25) lorsque la manivelle correspondante (11, 13) est dans une position horizontale descendante (a).

5. Pédalier selon la revendication 4, caractérisé en ce que la première articulation (34-36) est située sensiblement en face de la manivelle correspondante (11, 13).

6. Pédalier selon la revendication 4 ou 5, caractérisé en ce que chaque arbre (8, 9) est pourvu d'un bras radial (20, 22) disposé à l'extérieur en face de l'élément de sortie (15) et portant ladite seconde articulation, ledit bras étant décalé angulairement par rapport à la manivelle correspondante.

7. Pédalier selon la revendication 6, caractérisé en ce que chaque manivelle (11, 13) est montée de manière amovible sur l'arbre correspondant.

8. Pédalier selon l'une des revendications 4 à 7, caractérisé en ce que, en vue dans un plan vertical, les cercles (57, 58) représentant les trajectoires de la première et de la seconde articulation de chaque biellette (21, 23) sont tangents.

9. Pédalier selon l'une des revendications précédentes, caractérisé en ce que l'élément de sortie (15) est un porte-plateaux sur lequel un ou plusieurs plateaux dentés (16-18) sont montés de manière amovible.

## Patentansprüche

1. Tretlager ohne Totpunkt, insbesondere für Fahrräder, umfassend:
ein feststehende Tretlagerrohr (2),
eine äußere Hohlwelle (8), die mittels erster Lager in dem Tretlagerrohr zur Rotation um eine erste Achse (10) angebracht und mit einer ersten Kurbel (11) fest verbunden ist,
eine innere Welle (9), die zur Rotation mittels zweiter koaxialer Lager in der äußeren Welle montiert und mit einer zweiten Kurbel (13) fest verbunden ist,
Abdichtungsmittel, um einen hermetischen Schutz der Lager gegenüber dem Tretlageräußeren sicherzustellen,
ein Ausgangselement (15), welches zur Rotation um eine parallele und im Bezug zur ersten versetzte zweite Achse (25) auf ein exzentrisches Element (26) montiert ist, das an dem Tretlagerrohr befestigt ist, wobei das Ausgangselement dazu bestimmt ist, eine mechanische Obersetzung anzutreiben, und
zwei gelenkige Verbindungen (20 - 23, 31 - 36), die das Ausgangselement entsprechend mit jeder Kurbel oder mit jeder Welle verbinden,
dadurch gekennzeichnet, daß die Abdichtungsmittel erste Abdichtungsmittel (42, 46), die um die äußere Welle (8) in dem Tretlagerrohr (2) angeordnet sind und die ersten Lager (41, 45) gegenüber dem Äußeren dieses Rohres schützen, und zweite Abdichtungsmittel (47, 53), die in der äußeren Welle (8) angeordnet sind und die zweiten Lager (48, 51) gegenüber diesem Rohräußeren schützen, umfassen, und dadurch daß die zweiten Abdichtungsmittel eine ringförmige Dichtungspackung (53), die einen ringförmigen Zwischenraum zwischen der äußeren Welle (8) und der inneren Welle (9) auf der Seite der zweiten Kurbel (13) verschließt, sowie Verschlußmittel (47), die eine zentrale Bohrung (54) der äußeren Welle (8) an der Seite der ersten Kurbel (11) dicht verschließen, umfassen.

2. Tretlager gemäß Anspruch 1, dadurch gekennzeichnet, daß das exzentrische Element (26) mittels Schwenken um die erste Achse (10) verstellbar ist, um die Richtung seiner Exzentrizität (E) zu verstellen.

3. Tretlager gemäß Anspruch 2, dadurch gekennzeichnet, daß das exzentrische Element (26) in dem Tretlagerrohr (2) verschraubt ist und eine Sicherungsmutter (29) trägt, um es gegenüber dem Rohr zu blockieren.

4. Tretlager gemäß einem der vorhergehenden Ansprüche, dadurch gekennzeichnet, daß jede der gelenkigen Verbindungen ein Pleuel (21, 23) mit einerm Ende umfaßt, das mit dem Ausgangselement über ein erstes Gelenk (34 - 36) verbunden ist, daß das andere Ende des Pleuels mit der entsprechenden Welle (8, 9) oder mit der entsprechenden Kurbel (13) über ein zweites Gelenk (31 - 33) verbunden ist, und so daß sich das erste Gelenk (34 - 36) nahe einer radialen Ebene befindet, die durch die erste und die zweite Achse (10, 25) verläuft, wenn die entsprechende Kurbel (11, 13) in einer horizontalen, abwärts gerichteten Position (a) ist.

5. Tretlager gemäß Anspruch 4, dadurch gekennzeichnet, daß das erste Gelenk (34 - 36) genau gegenüber der entsprechenden Kurbel (11, 13) angeordnet ist.

6. Tretlager gemäß einem der Ansprüche 4 oder 5, dadurch gekennzeichnet, daß jede Welle (8, 9) mit einem radialen Arm (20, 22) versehen ist, der außen gegenüber dem Ausgangselement (15) angebracht ist und das zweite Gelenk trägt, wobei der Arm im Bezug auf die entsprechende Kurbel winkelmäßig versetzt ist.

7. Tretlager gemäß Anspruch 6, dadurch gekennzeichnet, daß jede Kurbel (11, 13) in lösbarer Form auf der entsprechenden Welle montiert ist.

8. Tretlager gemäß einem der Ansprüche 4 bis 7, dadurch gekennzeichnet, daß in einer vertikalen Ebene gesehen die Kreise (57, 58), die die Umlaufbahnen des ersten und des zweiten Gelenks jedes Pleuels (21, 23) darstellen, Tangenten sind.

9. Tretlager gemäß einem der vorhergehenden Ansprüche, dadurch gekennzeichnet, daß das Ausgangselement (15) eine Halteplatte ist, auf welcher eine oder mehrere verzahnte Scheiben (16 - 18) in lösbarer Form montiert sind.

## Claims

1. Crankset without a dead centre position, in particular for a bicycle, including:
- a fixed bottom bracket tube (2),
- a hollow outer spindle (8) rotatably mounted about a first axis (10) by first bearings in the bottom bracket tube and attached to a first crank (11),
- an inner spindle (9) rotatably mounted by second bearings coaxially in the outer spindle and attached to a second crank (13),
- sealing means for assuring sealed protection of said bearings as regards the exterior of the crankset,
- an output member (15) rotatably mounted about a second axis (25) parallel to and offset with respect to the first axis on an eccentric member (26) fixed to the bottom bracket tube, the output member being intended for driving a mechanical transmission, and
- two articulated linkages (20-23, 31-36) connecting the output member respectively to each crank or to each spindle,
characterized in that the sealing means include first sealing means (42, 46), disposed around the outer spindle (8) in the bottom bracket tube (2) and protecting the first bearings (41, 45) as regards the exterior of said tube, and second sealing means (47, 53), disposed in the outer spindle (8) and protecting the second bearings (48, 51) as regards the exterior of said spindle, and in that the second sealing means include an annular sealing gasket (53), which obturates an annular gap between the outer spindle (8) and the inner spindle (9) on the side of the second crank (13), and closing means (47) which obturate in a sealed manner a central bore (54) of the outer spindle (8) on the side of the first crank (11).

2. Crankset according to claim 1, characterized in that the eccentric member (26) is adjustable by pivoting about the first axis (10) to adjust the direction of its eccentricity (E).

3. Crankset according to claim 2, characterized in that the eccentric member (26) is screwed into the bottom bracket tube (2) and carries a lock-nut (29) arranged for blocking it against said tube.

4. Crankset according to any of the preceding claims, characterized in that each of said articulated linkages includes a connecting rod (21, 23) having one end connected to an output member by a first articulation (34-36), in that the other end of said connecting rod is connected to the corresponding spindle (8, 9) or to the corresponding crank (13) by a second articulation (31-33), and in that said first articulation (34-36) is situated in proximity to a radial plane passing through the first and second axis (10, 25) when the corresponding crank (11, 13) is in a descending horizontal position (a).

5. Crankset according to claim 4, characterized in that the first articulation (34-36) is situated substantially facing the corresponding crank (11, 13).

6. Crankset according to claim 4 or 5, characterized in that each spindle (8, 9) is provided with a radial arm (20, 22) disposed on the exterior facing the output member (15) and carrying said second articulation, said arm being offset angularly with respect to the corresponding crank.

7. Crankset according to claim 6, characterized in that each crank (11, 13) is removably mounted on the corresponding spindle.

8. Crankset according to any of claims 4 to 7, characterized in that, in a vertical plane view, the circles (57, 58) representing the trajectories of the first and second articulation of each connecting rod (21, 23) are tangent.

9. Crankset according to any of the preceding claims, characterized in that the output member (15) is a chain ring carrier on which one or more toothed chain rings (16-18) are removably mounted.
